# EUROPÄISCHE PATENTSCHRIFT

(11) **EP 3 746 340 B1**
(45) Veröffentlichungstag und Bekanntmachung des Hinweises auf die Patenterteilung: **30.03.2022**
(21) Anmeldenummer: 20707608.4
(22) Anmeldetag: 26.02.2020
(51) Int. Cl.: B60T 7/12, B60T 1/06

(54) **NUTZFAHRZEUG MIT HALTEBREMSE**
UTILITY VEHICLE WITH WITH HOLDING BRAKE
VÉHICULE UTILITAIRE AVEC FREIN D'ARRÊT

(30) Priorität: 26.04.2019 DE 202019102353 U
(43) Veröffentlichungstag der Anmeldung: 09.12.2020
(73) Patentinhaber: FAUN Umwelttechnik GmbH & Co. KG, 27711 Osterholz-Scharmbeck (DE)
(72) Erfinder: SANDKÜHLER, Georg, 27711 Osterholz-Scharmbeck (DE); KIRCHHOFF, Johannes, 58636 Iserlohn (DE)
(74) Vertreter: Laufhütte, Dieter
(86) Internationale Anmeldenummer: PCT/EP2020/055021
(87) Internationale Veröffentlichungsnummer: WO 2020/216495

(56) Entgegenhaltungen:
- EP-A1- 0 802 403
- EP-A2- 0 829 386
- WO-A2-2014/089580
- DE-A1-102004 039 044
- US-A1- 2009 118 885

## Beschreibung

Die vorliegende Erfindung betrifft ein Nutzfahrzeug nach dem Oberbegriff des Anspruchs 1.

Bei vielen Nutzfahrzeugen, insbesondere bei Abfallsammelfahrzeugen und Bussen, werden heutzutage typischerweise Komfort-Haltestellenbremsen eingesetzt, um die Fahrzeuge z.B. an Ladestellen oder Bushaltestellen am Wegrollen zu hindern. Dazu werden in der Regel die druckluftbetätigten Radbremsen der Fahrzeuge verwendet.

Damit sind zwei Nachteile verbunden. Einerseits ist der Energieverbrauch für die Bereitstellung der Druckluft aufgrund der vergleichsweise geringen Wirkungsgrade von Druckluftkompressoren relativ hoch. Andererseits muss, um bei betätigter Haltebremse wieder anzufahren, "auf Verdacht" ein Drehmoment vom Motor erzeugt und an die Antriebswelle übertragen werden, bevor die Haltebremse gelöst wird. Der Motor arbeitet also zumindest kurzzeitig gegen die Bremse und führt so zu einem erhöhten Energieverbrauch. Ferner kommt es typischerweise aufgrund der fehlenden Abstimmung zwischen Bremsmoment und Antriebsmoment zu einem unangenehmen Anfahrruck beim Lösen der Haltebremse.

Ein Beispiel für ein solches Nutzfahrzeug ist aus der WO2014/089580 A2 bekannt. Das dort beschriebene Nutzfahrzeug sieht eine entsprechende Bremsvorrichtung mit Haltemodus vor, bei dieser die vorbeschriebenen Nachteile auftreten.

Der vorliegenden Erfindung liegt daher die Aufgabe zugrunde, ein Nutzfahrzeug mit einer als Haltebremse fungierenden Bremsvorrichtung bereitzustellen, bei dem die vorgenannten Probleme vermieden werden.

Erfindungsgemäß wird diese Aufgabe durch ein Nutzfahrzeug mit den Merkmalen des Anspruchs 1 gelöst.

Demnach weist das Nutzfahrzeug eine von einer Motoreinheit rotatorisch antreibbare Welle und eine im Bereich der Welle angeordnete Bremsvorrichtung auf. Die Bremsvorrichtung umfasst eine Steuerung, mittels welcher die Motoreinheit regelbar ist, eine mit der Welle insbesondere drehfest verbundene Bremsscheibe und einen Träger mit einem Bremssattel, wobei der Bremssattel einen Bremsbelag aufweist, der mittels eines Aktuators gegen die Bremsscheibe drückbar bzw. pressbar ist. Die Bremsvorrichtung weist einen Haltebremsenmodus auf, in welchem der Bremsbelag permanent gegen die Bremsscheibe gedrückt bzw. gepresst wird, um ein Rollen des Nutzfahrzeugs zu verhindern. Im Haltebremsenmodus fungiert die Bremsvorrichtung also als Halte- bzw. Feststellbremse, sodass das Nutzfahrzeug im Stillstand gehalten wird. Daneben ist die Bremsvorrichtung vorzugsweise ebenfalls als Bremse einsetzbar, mittels welcher die Geschwindigkeit des Nutzfahrzeugs während der Fahrt verringerbar ist.

Erfindungsgemäß umfasst die Bremsvorrichtung eine mit der Steuerung elektrisch verbundene Messeinrichtung, mittels welcher das im Haltebremsenmodus auftretende momentane Bremsmoment direkt oder indirekt messbar und ein entsprechendes Signal an die Steuerung übermittelbar ist. Das Bremsmoment erzeugt die gewünschte Bremswirkung und somit das Stillhalten des Nutzfahrzeugs (bzw. bei vorzugsweise ebenfalls möglicher Verwendung der Bremsvorrichtung als normale Bremse eine Verzögerung des Nutzfahrzeugs). Auf Grundlage des gemessenen Bremsmoments ist die Motoreinheit im Haltebremsenmodus erfindungsgemäß derart ansteuerbar, dass die Welle mit einem dem Bremsmoment betragsgleichen und entgegengesetzten Drehmoment bzw. Antriebsmoment angetrieben wird.

Dadurch wird auf optimale und energieeffiziente Weise das Wegrollen des Nutzfahrzeugs bei aktivierter Haltebremse, d.h. im Haltebremsenmodus, verhindert. Gleichzeitig wird ein zusätzlicher Energieverbrauch vermieden, da unter Verwendung der erfindungsgemäßen Bremsvorrichtung das zur Überwindung des Bremsmoments notwendige Antriebsmoment genau bekannt ist und daher die Motoreinheit nicht gegen die Bremse arbeiten muss, um das Bremsmoment zu überwinden. Darüber hinaus verhindert das genaue Einstellen des zum Überwinden des Bremsmoments notwendigen Antriebsmoments das Auftreten eines Anfahrrucks.

Die erfindungsgemäße Bremsvorrichtung bietet zusätzlich den Vorteil, dass ein Rückwärtsrollen des Nutzfahrzeugs beim Lösen der Haltebremse vollständig vermieden werden kann. Steht das Nutzfahrzeug in Richtung Bergauffahrt (positive Steigung), so liegt durch die Hangabtriebskraft ein negatives Bremsmoment an. Die Messeinrichtung kann dies erkennen und durch eine entsprechende Ansteuerung der Motoreinheit kann ein Antriebsmoment mit dem passenden Vorzeichen bzw. der passenden Drehrichtung für die Vorwärtsfahrt an die Welle angelegt werden, bevor die Haltebremse gelöst wird.

Vorteilhafte Ausführungsformen der Erfindung ergeben sich aus den Unteransprüchen und der nachfolgenden Beschreibung.

In einer Ausführungsform ist vorgesehen, dass mittels der Messeinrichtung das Drehmoment der drehfest an der Welle angeordneten Bremsscheibe gegenüber der Welle messbar und dadurch das im Haltebremsenmodus auftretende Bremsmoment direkt bestimmbar ist. Hierfür ist die Messeinrichtung idealerweise im Bereich der Bremsscheibe angeordnet. Die Messung kann während des Haltebremsenmodus kontinuierlich oder in gewissen Zeitintervallen erfolgen.

In einer weiteren Ausführungsform ist vorgesehen, dass mittels der Messeinrichtung die im Haltebremsenmodus auf den Bremssattel und/oder den Träger wirkende Kraft messbar und dadurch das Bremsmoment bestimmbar ist. Hierzu umfasst die Messeinrichtung vorzugsweise einen Kraftaufnehmer bzw. eine Kraftmessdose. Die Messung kann während des Haltebremsenmodus kontinuierlich oder in gewissen Zeitintervallen erfolgen.

In einer weiteren Ausführungsform ist vorgesehen, dass der Träger gegenüber der Welle drehbar, insbesondere konzentrisch drehbar, an der Welle gelagert ist und sich an dem der Welle beabstandeten Ende auf der Messeinrichtung direkt oder indirekt abstützt. Alternativ kann auch vorgesehen sein, dass sich der Bremssattel auf der Messeinrichtung abstützt. Ebenfalls ist es möglich, dass der Träger nicht an der Welle, sondern einem anderen Teil des Nutzfahrzeugs montiert ist und aufgrund des im Haltebremsenmodus auftretenden Bremsmoments gegen die Messeinrichtung gedrückt wird, sodass die Haltekraft und dadurch das Bremsmoment bestimmbar ist.

In einer weiteren Ausführungsform ist vorgesehen, dass die Messeinrichtung oder die Steuerung eingerichtet ist, aus der gemessenen Kraft und dem Abstand zwischen Lagerung und Abstützung des Trägers das Bremsmoment zu ermitteln. Dieser Abstand entspricht der Länge des wirksamen Hebelarms und ergibt multipliziert mit der gemessenen Kraft das anliegende Bremsmoment. Der zur Umrechnung benötigte Wert des Hebelarms kann in der Messeinrichtung oder Steuerung hinterlegt sein.

In einer weiteren Ausführungsform ist vorgesehen, dass die Bremsvorrichtung eingerichtet ist, beim Anfahren im Haltebremsenmodus die Kontaktierung der Bremsscheibe durch den Bremsbelag durch eine entsprechende Betätigung bzw. Ansteuerung des Aktuators automatisch zu lösen, d.h. die Haltebremse zu lösen, sobald der Betrag des an der Welle anliegenden Drehmoments dem Betrag des Bremsmoments entspricht. Im Moment des Lösens der Haltebremse ist die Summe aus Bremsmoment und Antriebsmoment also genau Null, sodass es beim Anfahren zu keinem Anfahrruck kommt.

In einer weiteren Ausführungsform ist vorgesehen, dass die Bremsvorrichtung eingerichtet ist, beim Anfahren im Haltebremsenmodus das Drehmoment der Welle solange zu erhöhen, bis der Betrag der durch die Messeinrichtung gemessenen Kraft oder des gemessenen Drehmoments Null ist und genau zu diesem Zeitpunkt die Kontaktierung der Bremsscheibe durch den Bremsbelag automatisch zu lösen, d.h. die Haltebremse zu lösen.

In einer weiteren Ausführungsform ist vorgesehen, dass die Bremsvorrichtung eingerichtet ist, beim Anfahren im Haltebremsenmodus direkt ein Drehmoment an der Welle anzulegen d.h. ein Antriebsmoment zu erzeugen, welches dem gemessenen Bremsmoment betragsgleich und entgegengerichtet ist.

Generell ist sowohl die Messung des Bremsmoments als auch das Einstellen bzw. Erzeugen des Antriebsmoments mit Fehlern bzw. Toleranzen behaftet, sodass das Kriterium, dass die Beträge von Brems- und Antriebsmoment im Zeitpunkt des Lösens der Haltebremse einander gleichen, nur innerhalb eines gewissen Toleranzbereichs erfüllt sein muss.

In einer weiteren Ausführungsform ist vorgesehen, dass der Bremssattel die Bremsscheibe umfasst bzw. umgreift und auf jeder Seite der Bremsscheibe mindestens einen Bremsbelag aufweist. Beim Bremsen wird also die Bremsscheibe von beiden Seiten von jeweils mindestens einem Bremsbelag kontaktiert und dadurch abgebremst bzw. im Stillstand gehalten.

In einer weiteren Ausführungsform ist vorgesehen, dass der Aktuator mechanisch, hydraulisch, pneumatisch und/oder elektrisch betätigbar ist. Es können auch mehrere Aktuatoren mit unterschiedlichen Betätigungsmechanismen vorgesehen sein, beispielsweise einer zur Betätigung der Haltebremse zum Stillhalten des Nutzfahrzeugs und ein anderer zur Betätigung der normalen Bremse zum Verringern der Fahrtgeschwindigkeit. All diese Aufgaben können aber auch von dem oder den gleichen Aktuator(en) übernommen werden.

In einer weiteren Ausführungsform ist vorgesehen, dass der Aktuator durch die Steuerung steuerbar und/oder regelbar ist. Dadurch kann bei Erreichen eines definierten Antriebsmoments die Haltebremse automatisch durch entsprechende Betätigung bzw. Ansteuerung des Aktuators gelöst werden, sodass das Nutzfahrzeug ruckfrei anfahren kann.

In einer weiteren Ausführungsform ist vorgesehen, dass die Motoreinheit einen Elektromotor umfasst.

In einer weiteren Ausführungsform ist vorgesehen, dass es sich bei dem Nutzfahrzeug um ein Abfallsammelfahrzeug oder einen Bus handelt.

Die erfindungsgemäße Bremsvorrichtung kann an der Hinterachse, der Vorderachse, an allen Achsen oder, bei Nutzfahrzeugen mit mehr als zwei Radachsen, an mehreren Achsen vorgesehen sein. Bei mehreren Bremsvorrichtungen können entweder alle oder aber nur eine oder einige ausgewählte Bremsvorrichtungen einen Haltemodus mit entsprechender Messeinrichtung aufweisen.

Die vorliegende Erfindung betrifft weiterhin eine Bremsvorrichtung für ein erfindungsgemäßes Nutzfahrzeug. Dabei ergeben sich offensichtlich dieselben Vorteile und Eigenschaften wie für das erfindungsgemäße Nutzfahrzeug, weshalb an dieser Stelle auf eine wiederholende Beschreibung verzichtet wird. Die obigen Ausführungen hinsichtlich der möglichen Ausgestaltungen des erfindungsgemäßen Nutzfahrzeugs betreffend die Bremsvorrichtung gelten daher entsprechend.

Weitere Merkmale, Einzelheiten und Vorteile der Erfindung ergeben sich aus dem nachfolgend anhand der einzigen Figur erläuterten Ausführungsbeispiel.

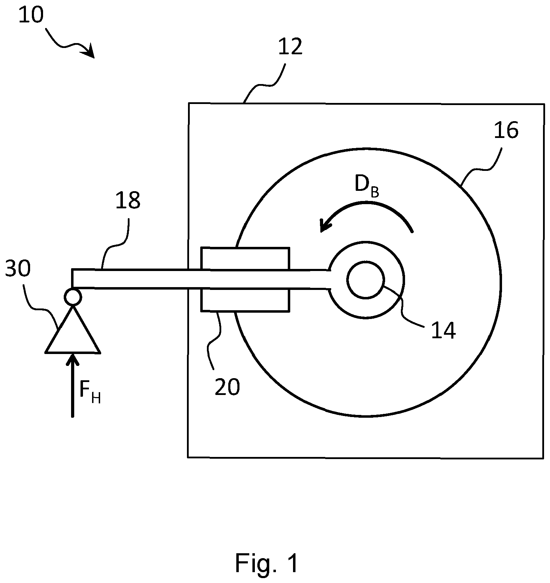

In der Figur 1 ist die Bremsvorrichtung 10 eines Ausführungsbeispiels des erfindungsgemäßen Nutzfahrzeugs schematisch dargestellt. Das erfindungsgemäße Nutzfahrzeug, bei dem es sich insbesondere um ein Abfallsammelfahrzeug oder einen Bus handelt, weist einen von einer Steuerung regelbaren Elektromotor 12 auf, welcher eine Welle 14 rotatorisch antreibt. Bei der Welle 12 handelt es sich insbesondere um eine der Radachsen des Nutzfahrzeugs. Die erfindungsgemäße Bremsvorrichtung 10 kann hierbei an einer oder mehrerer der Radachsen des Nutzfahrzeugs angeordnet sein.

Mit der Welle 14 ist eine kreisrunde Bremsscheibe 16 drehfest verbunden, d.h. die Bremsscheibe 16 dreht sich mit der Welle 14 mit. Die Bremsscheibe 16 ist konzentrisch zur Welle 14 angeordnet und kann im Bereich der Räder (nicht dargestellt) oder an einer anderen Position der Welle 14 angeordnet sein. Die Bremsscheibe 16 kann z.B. aus Metall oder einem kohlenstofffaserverstärkten Verbundwerkstoff gefertigt sein.

Im Bereich der Bremsscheibe 16 ist ein als Haltearm ausgebildeter Träger 18 an der Welle 14 konzentrisch drehbar gelagert, d.h. die Welle 14 kann sich relativ zu dem Haltearm 18 um eine gemeinsame Drehachse drehen. Der Haltearm 18 erstreckt sich ausgehend von der Lagerstelle an der Welle 14 radial nach außen und weist eine größere Länge als der Radius der Bremsscheibe 16 auf. Der Haltearm 18 kann so ausgebildet sein, dass er ein Lager aufweist, durch das die Welle 14 hindurchgeführt ist, welche sich in dem Lager relativ zum Haltearm 18 drehen kann.

Im äußeren Bereich der Bremsscheibe 16 ist ein Bremssattel 20 an dem Haltearm 18 montiert. Der Bremssattel 20 umfasst den äußeren Bereich der Bremsscheibe 16, wobei an jeder der zur Bremsscheibe 16 weisenden gegenüberliegenden Seiten des Bremssattels 20 mindestens ein Bremsbelag (nicht dargestellt) angeordnet ist. Ferner ist mindestens ein Aktuator vorgesehen (nicht gezeigt), mittels welchem die Bremsbeläge des Bremssattels 20 bei Betätigung der Bremsvorrichtung 10 von beiden Seiten gegen die Bremsscheibe 16 gedrückt werden. Durch die Reibung zwischen den Bremsbelägen und den Außenseiten der Bremsscheibe 16 wird der gewünschte Feststell- bzw. Bremseffekt erzielt. Bei gelöster Bremse kann sich die Bremsscheibe 16 zwischen den beiden gegenüberliegenden Seiten des Bremssattels 20 hindurchbewegen bzw. hindurchdrehen. Der Bremssattel 20 kann als Festsattel, Schwimmsattel oder Pendelsattel ausgeführt sein.

Die Bremsvorrichtung 10 weist einen Haltebremsenmodus auf, in dem das Nutzfahrzeug gegen ein Wegrollen gesichert ist, beispielsweise bei einem Halt an einer Steigung / Gefälle. Die Bremsvorrichtung 10 kann also als Halte- bzw. Feststellbremse verwendet werden. Im Haltebremsenmodus werden durch entsprechende Betätigung des Aktuators die Bremsbeläge des Bremssattels 20 gegen die Bremsscheibe 16 gepresst, sodass diese und somit auch die Welle 14 im Stillstand gehalten bzw. an einer Drehung gehindert wird. Zum Anfahren des Nutzfahrzeugs, d.h. im Moment des Lösens der Haltebremse, muss die Welle 14 mit einem Drehmoment bzw. Antriebsmoment D_{A} angetrieben werden, welches dem Bremsmoment D_{B} der Haltebremse entgegengesetzt und vom Betrag mindestens ebenso groß ist.

Die vorliegende Erfindung ermöglicht es nun, das im Haltebremsenmodus momentan anstehende Bremsmoment D_{B} zu messen und durch eine entsprechende Ansteuerung des Elektromotors 12 ein dem Bremsmoment D_{B} betragsgleiches entgegengerichtetes Antriebsmoment D_{A} zu erzeugen, sodass bei einem Lösen der Haltebremse das Nutzfahrzeug ohne Ruck anfährt. Dadurch, dass das Antriebsmoment D_{A} dem Bremsmoment D_{B} betragsmäßig angepasst wird, muss nicht auf Verdacht ein entsprechend großes Drehmoment erzeugt und gegen die Bremse gearbeitet werden, wodurch der Energieverbrauch des Elektromotors reduziert wird.

Hierzu ist erfindungsgemäß eine Messeinrichtung 30 vorgesehen, mittels welcher das momentane Bremsmoment D_{B} direkt oder indirekt gemessen werden kann. Im vorliegenden Ausführungsbeispiel umfasst die Messvorrichtung 30 einen Kraftaufnehmer bzw. eine Kraftmessdose, welche so angeordnet ist, dass sich das der Welle 14 beabstandete Ende des Haltearms 18 auf der Kraftmessdose abstützt. Allerdings kann die Messeinrichtung 30 auch an einer beliebigen anderen Stelle des Haltearms 18 angeordnet sein. Alternativ kann auch vorgesehen sein, dass sich der Bremssattel 20 auf der Messeinrichtung 30 abstützt. Bei betätigter Haltebremse (also in einem Zustand, in dem die Bremsbeläge dauerhaft gegen die stillstehende Bremsscheibe 16 gepresst sind) wird bedingt durch den Kraftschluss zwischen der Bremsscheibe 16 und den Bremsbelägen des an dem Haltearm 18 fest montierten Bremssattels 20 der an der Welle 14 drehbar gelagerte Haltearm 18 gegen die Messeinrichtung 30 gedrückt.

Der von der Messeinrichtung 30 gemessene Wert der Haltekraft F_{H} dient nun zusammen mit der Länge L des wirksamen Hebels, also vorliegend der Länge des Haltearms 18, der Berechnung des beaufschlagenden Bremsmoments D_{B} über die Formel D_{B} = F_{H} · L. Die Berechnung kann in der Steuerung oder in einer der Messeinrichtung 30 zugeordneten Steuereinheit stattfinden. Die Messeinrichtung 30 ist mit der Steuerung elektrisch verbunden und übermittelt dieser ein der gemessenen Kraft F_{H} bzw. dem berechneten Bremsmoment D_{B} entsprechendes Signal, woraufhin der Elektromotor 12 derart geregelt wird, dass an der Welle 14 ein Antriebsmoment D_{A} erzeugt bzw. angelegt wird, welches dem gemessenen Bremsmoment D_{B} entgegengerichtet und betragsgleich ist.

Zum Anfahren des Nutzfahrzeugs kann das Drehmoment des Elektromotors 12 bzw. das Antriebsmoment D_{A} so lange gesteigert werden, bis die gemessene Kraft F_{H} an der Messeinrichtung 30 gerade Null ist, um in diesem Moment durch entsprechende Ansteuerung des Aktuators die Haltebremse zu lösen. Alternativ kann die gemessene Kraft F_{H} in der Steuerung bzw. Messeinrichtung 30 so verarbeitet werden, dass sogleich das erforderliche Anfahrmoment D_{A} aufgebaut und gleichzeitig die Haltebremse gelöst wird. Der Wert des Hebelarms L ist vorzugsweise in der Steuerung oder einer Speichereinheit gespeichert und zur Berechnung abrufbar.

Vorzugsweise kann die erfindungsgemäße Bremsvorrichtung 10 ebenfalls als normale Bremse verwendet werden, um das Nutzfahrzeug während einer Fahrt abzubremsen, d.h. die Geschwindigkeit zu verringern.

### Bezugszeichenliste:

- 10: Bremsvorrichtung
- 12: Motoreinheit
- 14: Welle
- 16: Bremsscheibe
- 18: Träger
- 20: Bremssattel
- 30: Messeinrichtung
- D_{A}: Drehmoment der Welle / Antriebsmoment
- D_{B}: Bremsmoment
- F_{H}: Haltekraft

## Patentansprüche

1. Nutzfahrzeug mit einer von einer Motoreinheit (12) rotatorisch antreibbaren Welle (14) und einer im Bereich der Welle (14) angeordneten Bremsvorrichtung (10), wobei die Bremsvorrichtung (10) eine Steuerung, mittels welcher die Motoreinheit (12) regelbar ist, eine mit der Welle (14) verbundene Bremsscheibe (16) und einen Träger (18) mit einem Bremssattel (20) umfasst, wobei der Bremssattel (20) einen Bremsbelag aufweist, welcher mittels eines Aktuators gegen die Bremsscheibe (16) drückbar ist und wobei die Bremsvorrichtung (10) einen Haltebremsenmodus aufweist, in welchem der Bremsbelag permanent gegen die Bremsscheibe (16) gedrückt wird, um ein Rollen des Nutzfahrzeugs zu verhindern,
**dadurch gekennzeichnet,**
**dass** die Bremsvorrichtung (10) eine mit der Steuerung elektrisch verbundene Messeinrichtung (30) umfasst, mittels welcher das im Haltebremsenmodus auftretende momentane Bremsmoment (D_{B}) messbar ist, wobei auf Grundlage des gemessenen Bremsmoments (D_{B}) durch entsprechende Regelung der Motoreinheit (12) die Welle (14) mit einem dem Bremsmoment (D_{B}) betragsgleichen und entgegengesetzten Drehmoment (D_{A}) antreibbar ist.

2. Nutzfahrzeug nach Anspruch 1, **dadurch gekennzeichnet, dass** mittels der Messeinrichtung (30) das Drehmoment der Bremsscheibe (16) gegenüber der Welle (14) messbar ist.

3. Nutzfahrzeug nach Anspruch 1 oder 2, **dadurch gekennzeichnet, dass** mittels der Messeinrichtung (30) die auf den Bremssattel (20) und/oder Träger (18) wirkende Kraft (F_{H}) messbar ist.

4. Nutzfahrzeug nach Anspruch 3, **dadurch gekennzeichnet, dass** der Träger (18) gegenüber der Welle (14) drehbar, insbesondere konzentrisch drehbar, an der Welle (14) gelagert ist und sich an dem der Welle (14) beabstandeten Ende auf der Messeinrichtung (30) abstützt.

5. Nutzfahrzeug nach Anspruch 3 oder 4, **dadurch gekennzeichnet, dass** die Messeinrichtung (30) einen Kraftaufnehmer umfasst, auf dem sich der Träger (14) abstützt.

6. Nutzfahrzeug nach Anspruch 4 oder 5, **dadurch gekennzeichnet, dass** die Messeinrichtung (30) oder die Steuerung eingerichtet ist, aus der gemessenen Kraft (F_{H}) und dem Abstand zwischen Lagerung und Abstützung des Trägers (14) das Bremsmoment zu ermitteln.

7. Nutzfahrzeug nach einem der vorhergehenden Ansprüche, **dadurch gekennzeichnet, dass** die Bremsvorrichtung (10) eingerichtet ist, beim Anfahren im Haltebremsenmodus die Kontaktierung der Bremsscheibe (16) durch den Bremsbelag automatisch zu lösen, sobald der Betrag des an der Welle (14) anliegenden Drehmoments (D_{A}) dem Betrag des Bremsmoments (D_{B}) entspricht.

8. Nutzfahrzeug nach Anspruch 6, **dadurch gekennzeichnet, dass** die Bremsvorrichtung (10) eingerichtet ist, beim Anfahren im Haltebremsenmodus das Drehmoment der Welle (14) solange zu steigern, bis der Betrag der durch die Messeinrichtung (30) gemessenen Kraft (F_{H}) oder des Drehmoments (D_{B}) Null ist und zu diesem Zeitpunkt die Kontaktierung der Bremsscheibe (16) durch den Bremsbelag automatisch zu lösen.

9. Nutzfahrzeug nach Anspruch 6, **dadurch gekennzeichnet, dass** die Bremsvorrichtung (10) eingerichtet ist, beim Anfahren im Haltebremsenmodus direkt ein Drehmoment (D_{A}) an der Welle (14) anzulegen, welches dem gemessenen Bremsmoment (D_{B}) betragsgleich und entgegengerichtet ist.

10. Nutzfahrzeug nach einem der vorhergehenden Ansprüche, **dadurch gekennzeichnet, dass** der Bremssattel (20) die Bremsscheibe (16) umgreift und auf jeder Seite der Bremsscheibe (16) mindestens einen Bremsbelag aufweist.

11. Nutzfahrzeug nach einem der vorhergehenden Ansprüche, **dadurch gekennzeichnet, dass** der Aktuator mechanisch, hydraulisch und/oder elektrisch betätigbar ist.

12. Nutzfahrzeug nach einem der vorhergehenden Ansprüche, **dadurch gekennzeichnet, dass** der Aktuator durch die Steuerung steuerbar und/oder regelbar ist.

13. Nutzfahrzeug nach einem der vorhergehenden Ansprüche, **dadurch gekennzeichnet, dass** die Motoreinheit (12) einen Elektromotor umfasst.

14. Nutzfahrzeug nach einem der vorhergehenden Ansprüche, **dadurch gekennzeichnet, dass** es sich bei dem Nutzfahrzeug um ein Abfallsammelfahrzeug oder einen Bus handelt.

## Claims

1. A utility vehicle having a shaft (14) that is rotatably drivable by an engine unit (12) and having a braking device (10) arranged in the region of the shaft (14), wherein the braking device (10) comprises a control by means of which the engine unit (12) can be regulated, a brake disk (16) connected to the shaft (14), and a carrier (18) with a brake caliper (20), wherein the brake caliper (20) has a brake pad that can be pressed toward the brake disk (16) by means of an actuator, and wherein the braking device (10) has a parking brake mode in which the brake pad is permanently pressed against the brake disk (16) to prevent a rolling of the utility vehicle,
**characterized in that**
the braking device (10) comprises a measuring device (30) that is electrically connected to the control and by means of which the instantaneous braking torque (D_{B}) occurring in the parking brake mode is measurable, with the shaft (14) being drivable by a corresponding regulation of the engine unit (12) on the basis of the measured braking torque (D_{B}) by a torque (D_{A}) equal in amount and opposite to the braking torque (D_{B}).

2. A utility vehicle in accordance with claim 1, **characterized in that** the torque of the brake disk (16) with respect to the shaft (14) is measurable by means of the measuring device (30).

3. A utility vehicle in accordance with claim 1 or claim 2, **characterized in that** the force (F_{H}) acting on the brake caliper (20) and/or on the carrier (18) is measurable by means of the measuring device (30).

4. A utility vehicle in accordance with claim 3, **characterized in that** with respect to the shaft (14) the carrier (18) is rotatably supported, in particular concentrically rotatably supported, at the carrier (14) and is supported on the measuring device (30) at the end spaced apart from the shaft (14).

5. A utility vehicle in accordance with claim 3 or claim 4, **characterized in that** the measuring device (30) comprises a force transducer on which the carrier (14) is supported.

6. A utility vehicle in accordance with claim 4 or claim 5, **characterized in that** the measuring device (30) or the control is configured to determine the braking torque from the measured force (F_{H}) and the spacing between the bearing and the support of the carrier (14).

7. A utility vehicle in accordance with one of the preceding claims, **characterized in that** the braking device (10) is configured to automatically release the contact of the brake disk (16) by the brake pad when moving off in the parking brake mode as soon as the amount of the torque (D_{A}) applied to the shaft (14) corresponds to the amount of the braking torque (D_{B}).

8. A utility vehicle in accordance with claim 6, **characterized in that** the braking device (10) is configured to increase the torque of the shaft (14) when moving off in the parking brake mode for so long until the amount of the force (F_{H}) measured by the measuring device or of the torque (DB) is zero and to automatically release the contact of the brake disk (16) by the brake pad.

9. A utility vehicle in accordance with claim 6, **characterized in that** the braking device (10) is configured to directly apply a torque (D_{A}) to the shaft (14) when moving off in the parking brake mode that is of the same amount and opposite to the measured braking torque (D_{B}).

10. A utility vehicle in accordance with one of the preceding claims, **characterized in that** the brake caliper (20) engages around the brake disk (16) and has at least one brake pad on each side of the brake disk (16).

11. A utility vehicle in accordance with one of the preceding claims, **characterized in that** the actuator is mechanically, hydraulically, and/or electrically actuable.

12. A utility vehicle in accordance with one of the preceding claims, **characterized in that** the actuator can be controlled and/or regulated by the control.

13. A utility vehicle in accordance with one of the preceding claims, **characterized in that** the engine unit (12) comprises an electric motor.

14. A utility vehicle in accordance with one of the preceding claims, **characterized in that** the utility vehicle is a garbage collection vehicle or a bus.

## Revendications

1. Véhicule utilitaire comprenant un arbre (14) pouvant être entraîné en rotation par un ensemble moteur (12) et un dispositif de freinage (10) disposé dans la zone de l'arbre (14), le dispositif de freinage (10) comprenant un organe de commande, au moyen duquel l'ensemble moteur (12) peut être régulé, un disque de frein (16) relié à l'arbre (14) et un support (18) avec un étrier de frein (20), l'étrier de frein (20) comportant une garniture de frein, qui peut être pressée contre le disque de frein (16) au moyen d'un actionneur et le dispositif de freinage (10) comportant un mode frein d'arrêt, dans lequel la garniture de frein est pressée en permanence contre le disque de frein (16) pour empêcher que le véhicule utilitaire roule,
**caractérisé en ce que**
le dispositif de freinage (10) comprend un dispositif de mesure (30) relié électriquement à l'organe de commande, au moyen duquel le couple de freinage (D_{B}) actuel se produisant en mode frein d'arrêt peut être mesuré, dans lequel, sur la base du couple de freinage (D_{B}) mesuré, l'arbre (14) peut être entraîné avec un couple (D_{A}) de sens opposé au couple de freinage (D_{B}) et de même valeur que celui-ci par une régulation correspondante de l'ensemble moteur (12).

2. Véhicule utilitaire selon la revendication 1, **caractérisé en ce que** le couple du disque de frein (16) par rapport à l'arbre (14) peut être mesuré au moyen du dispositif de mesure (30).

3. Véhicule utilitaire selon la revendication 1 ou 2, **caractérisé en ce que** la force (F_{H}) agissant sur l'étrier de frein (20) et/ou le support (18) peut être mesurée au moyen du dispositif de mesure (30).

4. Véhicule utilitaire selon la revendication 3, **caractérisé en ce que** le support (18) est monté rotatif, en particulier rotatif de manière concentrique, par rapport à l'arbre (14), sur l'arbre (14) et s'appuie avec l'extrémité espacée de l'arbre (14) sur le dispositif de mesure (30).

5. Véhicule utilitaire selon la revendication 3 ou 4, **caractérisé en ce que** le dispositif de freinage (30) comprend un récepteur de force sur lequel s'appuie le support (14).

6. Véhicule utilitaire selon la revendication 4 ou 5, **caractérisé en ce que** le dispositif de mesure (30) ou l'organe de commande est configuré pour déterminer le couple de freinage à partir de la force (F_{H}) mesurée et de la distance entre le palier et l'appui du support (14).

7. Véhicule utilitaire selon l'une des revendications précédentes, **caractérisé en ce que** le dispositif de freinage (10) est configuré pour, lors du démarrage en mode frein d'arrêt, relâcher automatiquement le contact de la garniture de frein sur le disque de frein (16), dès que la valeur du couple (D_{A}) appliqué sur l'arbre (14) correspond à la valeur du couple de freinage (D_{B}).

8. Véhicule utilitaire selon la revendication 6, **caractérisé en ce que** le dispositif de freinage (10) est configuré pour, lors du démarrage en mode frein d'arrêt, augmenter le couple de l'arbre (14) jusqu'à ce que la valeur de la force (F_{H}) mesurée par le dispositif de mesure (30) ou du couple (D_{B}) soit nulle et relâcher à ce moment le contact de la garniture de frein sur le disque de frein (16).

9. Véhicule utilitaire selon la revendication 6, **caractérisé en ce que** le dispositif de freinage (10) est configuré pour, lors du démarrage en mode frein d'arrêt, appliquer directement un couple (D_{A}) sur l'arbre (14) qui est de même valeur que le couple de freinage (D_{B}) mesuré et dans le sens opposé à celui-ci.

10. Véhicule utilitaire selon l'une des revendications précédentes, **caractérisé en ce que** l'étrier (20) entoure le disque de frein (16) et comporte au moins une garniture de frein de chaque côté du disque de frein (16).

11. Véhicule utilitaire selon l'une des revendications précédentes, **caractérisé en ce que** l'actionneur peut être actionné de manière mécanique, hydraulique et/ou électrique.

12. Véhicule utilitaire selon l'une des revendications précédentes, **caractérisé en ce que** l'actionneur peut être commandé et/ou régulé par l'organe de commande.

13. Véhicule utilitaire selon l'une des revendications précédentes, **caractérisé en ce que** l'ensemble moteur (12) comprend un moteur électrique.

14. Véhicule utilitaire selon l'une des revendications précédentes, **caractérisé en ce que** le véhicule utilitaire est un véhicule de collecte de déchets ou un bus.
